# EUROPÄISCHE PATENTANMELDUNG

(11) **EP 2 033 839 A1**
(43) Veröffentlichungstag der Anmeldung: **11.03.2009**
(21) Anmeldenummer: 08466023.2
(22) Anmeldetag: 04.09.2008
(51) Int. Cl.: B60N 2/30

(54) **Ausklappbarer Sitz**

(30) Priorität: 07.09.2007 CZ 20070612
(71) Anmelder: Skoda Auto A.S., 293 60 Mladá Boleslav (CZ)
(72) Erfinder: Olah, Peter, 811 01 Bratislava (SK); Rejmon, Josef, 294 41 Semcice (CZ)

(57) **Zusammenfassung**

Ausklappbarer Sitz für Kraftfahrzeuge versehen mit einem Doppelboden (2,3) im Kofferraum (1) und einer Ladekannte (6). Der ausklappbare Sitz (10) ist in der Grundposition integriert im Kofferraum (1) mit Doppelboden (2,3) und in der Arbeitsposition herausgeklappt aus dem Fahrzeuginnenraum, wobei in beiden Positionen der Sitz (10) parallel mit dem Kofferraumboden (3) verläuft.

## Beschreibung

### Technisches Gebiet

Die Erfindung bezieht sich auf die ausklappbaren Kraftfahrzeugsitze integriert im Kofferraum mit Doppelboden.

### Bisheriger Stand der Technik

Kraftfahrzeuge werden zum Transport von Personen oder Ladungen auf kurze oder lange Entfernungen verwendet. Im Bedarfsfall einer Raststation haben der Fahrer und auch die Beifahrer gegenwärtig mehrere Möglichkeiten, diese zur Entspannung in sitzender Position zu nutzen. An den Rasttationen, an denen nicht überall Sitzbänke zur Verfügung stehen; auf den bestehenden Sitzen in den Fahrzeugen, was nicht geeignet ist, denn für eine Entspannung ist es notwendig die Position und den Ort zu verändern. Eine weitere Möglichkeit besteht darin, eigene Klappstühle oder -sessel mitzuführen. Ein Nachteil ist die überschüssige Ladung, denn solche Sitze benötigen im Kofferraum des Kraftfahrzeugs Platz, welcher besser ausgenutzt werden kann.

### Darstellung der Erfindung

Die Aufgabe wird durch den ausklappbaren Sitz des Kraftfahrzeugs laut der beigelegten Erfindung gelöst, welcher im Kofferraum im Doppelboden integriert ist.
Der neue Gedanke besteht in der Möglichkeit ein komfortables Sitzen auf der Kofferraumkante zu ermöglichen und den ausklappbaren Sitz parallel als Bestandteil des Doppelbodens mit der Möglichkeit einer Ablagefläche unter diesem zu ermöglichen. Der Sitzmechanismus vereinnahmt keinen zusätzlichen Raum im Kofferraum ein.
Der Doppelboden des Kofferraums ist im hinteren Bereich heraus klappbar und nach dem Herausklappen stützt sich dieser an die Kofferraumladekante ab und auf der anderen Seite wird ein gepolsterte Sitz mit einer Tragfähigkeit von 150kg gebildet.

### Übersicht der Figuren der Zeichnungen

In der Fig. 1 ist die Gesamtansicht auf den ausklappbaren Sitz im Kofferraum in der Arbeitsposition, in der Fig. 2 ist die Gesamtansicht auf den ausklappbaren Sitz im Kofferraum in der Grundposition.
In der Fig. 3 ist das Detail des Querschnitts A - A an der Stelle des Scharniers in Arbeitsposition des ausklappbaren Sitzes und in der Fig. 4 ist das Detail des Querschnitts B - B an der Stelle des Scharniers in Grundposition des ausklappbaren Sitzes zu sehen.

### Ausführungsbeispiel der Erfindung

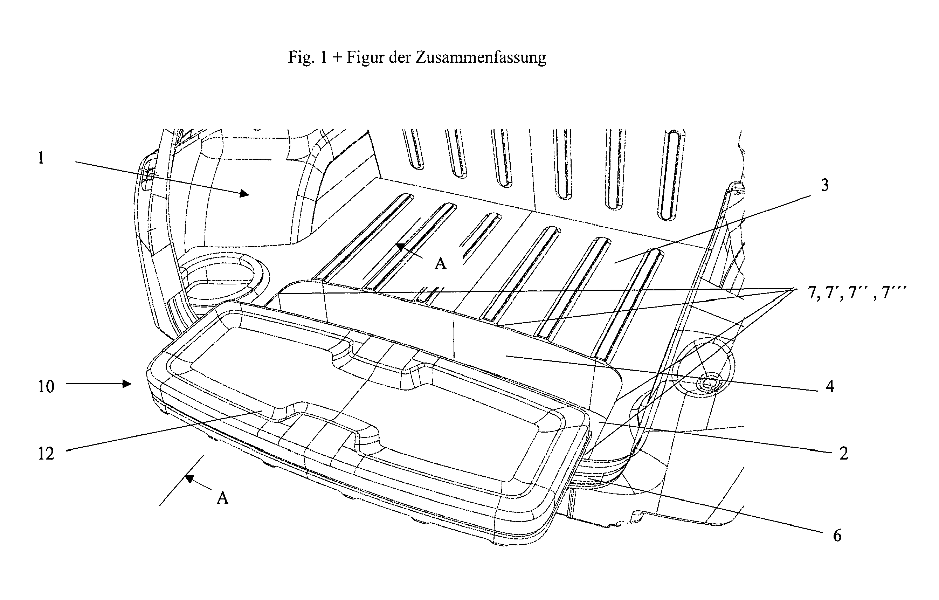

In der Fig. 1 ist die Gesamtansicht auf den heraus geklappten Sitz im Kofferraum 1 in der Arbeitsposition zu sehen. Der Kofferraum 1 ist durch den Dachhimmel des Fahrzeugs, die Innenwände und den Kofferraumboden 2 begrenzt. Im Kofferraumboden 3 ist im hinteren Teil beim Schweller 5 die Öffnungen 7, 7', 7'', 7''' im Wesentlichen in der Form eines Quaders.
In der Öffnung 7, 7', 7'', 7''' Word ein Zwischenraum 4 gebildet, d.h. zwischen der gedachten Ebene des Kofferraums 1 und des Kofferraumbodens 2.

In der Arbeitsposition ist der ausklappbare Sitz aus dem Fahrzeug herausgeklappt. Der ausklappbare Sitz gebildet durch den Sitz 10 ist mit der oberen Seite 11 an die Ladekante des Kofferraums 6 des Schwellers 5 angelehnt. Die Innenseite des Sitzes ist mit einer Polsterung 12 versehen.

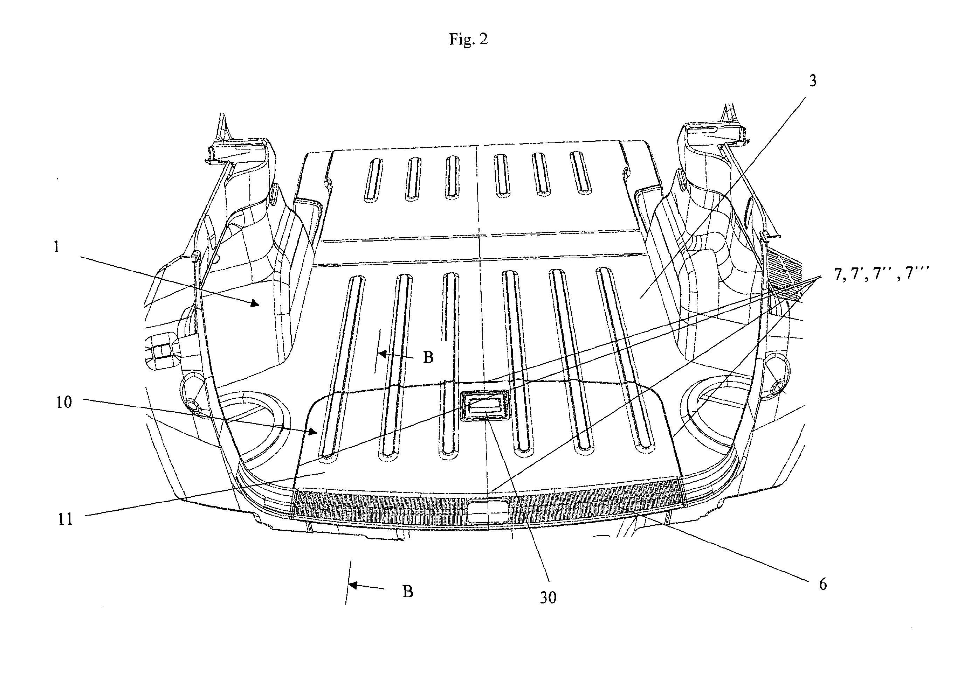

In der Fig. 2 ist die Gesamtansicht auf den ausklappbaren Sitz im Kofferraum in der Grundposition. Der ausklappbare Sitz des Fahrzeugs versehen mit einem doppelten Boden 2, 3 im Kofferraum 1 und der Ladekannte des Kofferraums 6, welcher durch einen ausklappbaren Sitz 10 gebildet wird, ist in der Grundposition im Kofferraum 1 im Doppelboden 2, 3 integriert. In dieser Position verläuft die Oberkannte 11 des Sitzes 10 mit dem Boden des Kofferraums 3, und bildet so eine Ebene aus. Die Oberseite 11 der Sitzes 10 ist mit einem Griff versehen 30.

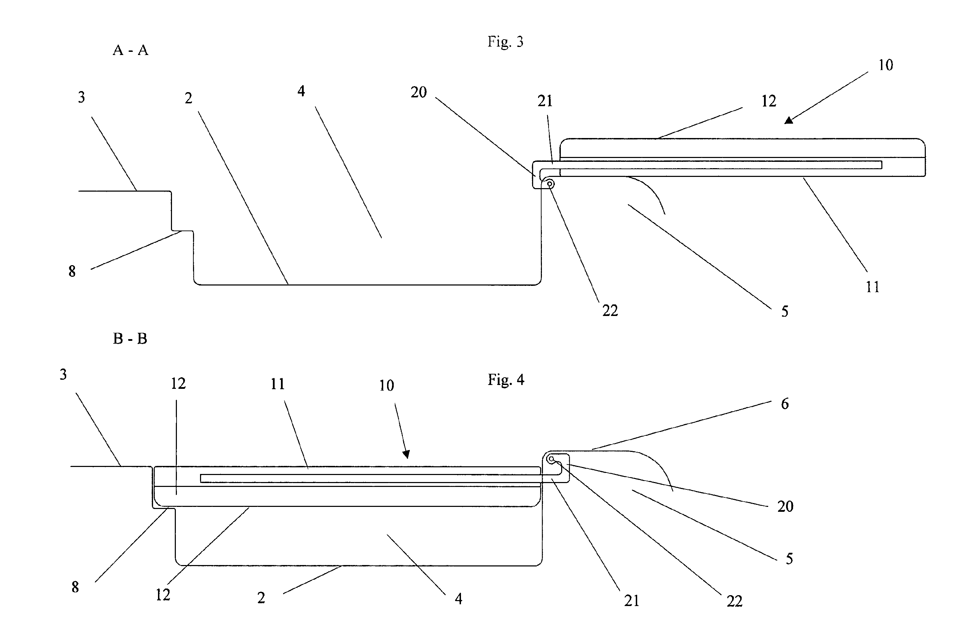

In der Fig. 3 ist das Detail des Querschnitts A - A an der Stelle des Scharniers in Arbeitsposition des ausklappbaren Sitzes zu sehen. Der Sitz 10 ist mittels mindestens einer Einhängevorrichtung 20 am Fahrzeug gebildet durch ein Scharnier mit der U-Form befestigt, welches mit einem Ende fest mit dem Sitz 10 und mit der anderen Seite drehbar mit dem Fahrzeug im Schwellerbereich 5 befestigt ist.

In der Fig. 4 ist das Detail des Querschnitts B - B an der Stelle des Scharniers in Grundposition des ausklappbaren Sitzes zu sehen. Der ausklappbare Sitz kann in dieser Position selbstsperrend halten. In vorteilhafter Ausführung wird wenigstens an einer Seite der Öffnung 7, 7', 7'', 7''' eine Einpressung mit Überstand gebildet, an welche der ausklappbare Sitz abgestützt wird.

In beiden Positionen - Grundposition und auch Arbeitsposition ist der Sitz 10 parallel verlaufend mit dem Boden des Kofferraums 3.

### Gewerbliche Anwendbarkeit

Der ausklappbare Sitz integriert im doppelten Kofferraumboden kann bei allen Kraftfahrzeugen angewendet werden.

### Verwendete Kennzeichnungen

- 1: Kofferraum
- 2: Kofferraumboden
- 3: Kofferraumboden
- 4: Zwischenraum
- 5: Schweller
- 6: Ladekannte
- 7, 7', 7'', 7''': Öffnung mi Kofferraumboden
- 8: Einpressung
- 10: Sitz
- 11: Oberseite
- 12: Polsterung
- 20: Scharnier
- 21: Längerer Achsschenkel
- 22: Bolzen
- 30: Griff

## Patentansprüche

1. Ausklappbarer Sitz für Kraftfahrzeuge versehen mit einem Doppelboden (2, 3) im Kofferraum (1) und der Ladekannte (6), **dadurch gekennzeichne t, dass** dieser durch den ausklappbaren Sitz (10) in der Grundposition integriert im Kofferraum (1) im Zwischenraum (4) im doppelten Kofferraumboden (2, 3) und in der Arbeitsposition heraus geklappt aus dem Fahrzeuginnenraum ist, wobei in beiden Positionen der Sitz (10) parallel verlaufend mit dem Kofferraumboden (3) verläuft, gebildet wird.

2. Der ausklappbare Sitz nach Anspruch 1, **dadurch gekennzeichnet, dass** der Sitz (10) mittels wenigstens einer Einhängevorrichtung (20) am Fahrzeug gebildet durch ein Scharnier mit der U-Form befestigt, welches mit einem Ende fest mit dem Sitz (10) und mit der anderen Seite drehbar mit dem Fahrzeug im Schwellerbereich (5) befestigt ist.

3. Ausklappbarer Sitz nach vorherigen Ansprüchen, **dadurch gekennzei chnet, dass** in der Arbeitsposition der Sitz (10) mit der Oberseite (11) an der Ladekannte des Kofferraums (6) am Schweller (5) abgestützt ist.

4. Ausklappbarer Sitz nach vorherigen Ansprüchen, **dadurch gekennzei chnet, dass** dieser in der Grundposition mit der Oberseite (11) der Sitz (10) mit dem Kofferraumboden (3) zusammenläuft.

5. Ausklappbarer Sitz nach vorherigen Ansprüchen, **dadurchgekennzeic hnet, dass** die Oberseite (11) des Sitzes (10) mit einem Griff versehen ist.

6. Ausklappbarer Sitz nach vorherigen Ansprüchen, **dadurch gekennzeic hnet, dass** die Innenseite des Sitzes mit einer Polsterung (12) versehen ist.
